# EUROPÄISCHE PATENTSCHRIFT

(11) **EP 1 735 587 B1**
(45) Veröffentlichungstag und Bekanntmachung des Hinweises auf die Patenterteilung: **13.04.2011**
(21) Anmeldenummer: 05708061.6
(22) Anmeldetag: 28.02.2005
(51) Int. Cl.: G01B 11/24, G01B 11/30, G01B 9/02

(54) **INTERFEROMETRISCHE MESSVORRICHTUNG MIT EINER ADAPTIONSVORRICHTUNG ZUR LICHTINTENSITÄTSANPASSUNG**
INTERFEROMETRIC MEASURING DEVICE COMPRISING AN ADAPTATION DEVICE FOR ADAPTING THE LIGHT INTENSITY
SYSTEME DE MESURE INTERFEROMETRIQUE POURVU D'UN DISPOSITIF D'ADAPTATION POUR ADAPTER L'INTENSITE LUMINEUSE

(30) Priorität: 05.04.2004 DE 102004017232
(43) Veröffentlichungstag der Anmeldung: 27.12.2006
(73) Patentinhaber: Robert Bosch GmbH, 70442 Stuttgart (DE)
(72) Erfinder: LINDNER, Michael, 71397 Leutenbach (DE); STRÄHLE, Jochen, 71287 Weissach (DE)
(86) Internationale Anmeldenummer: PCT/EP2005/050847
(87) Internationale Veröffentlichungsnummer: WO 2005/098353

(56) Entgegenhaltungen:
- DE-A1- 10 131 778
- DE-A1- 10 162 180
- US-A- 4 957 367
- US-A- 5 526 116

## Beschreibung

Die Erfindung bezieht sich auf eine interferometrische Messvorrichtung zur dreidimensionalen Formvermessung an Messobjekten mit einem Licht von einer Lichtquelle über einen Eingangslichtweg aufnehmenden und in einen Messlichtweg und einen Referenzlichtweg aufteilenden Strahlteiler, mit einem Bildaufnehmer, dem von dem Messobjekt und einer Referenz zurückgeworfenes und zur Interferenz gebrachtes Licht über einen Ausgangslichtweg zur Umwandlung in elektrische Signale zuführbar ist, mit einer Auswerteeinrichtung zum Bestimmen der Oberflächenform aus den Signalen und mit einer Adaptionsvorrichtung zur Anpassung der Lichtintensität oder der aus dem interferierenden Licht erhaltenen Signale.

Eine interferometrische Messvorrichtung zur dreidimensionalen Formvermessung ist in der US 4,957,367 A gezeigt. Bei dieser bekannten interferometrischen Messvorrichtung ist eine Laserlichtquelle vorhanden, deren Lichtintensität in Abhängigkeit von der Reflektivität der Messoberfläche variabel steuerbar ist. Ferner ist in einem Referenzlichtweg ein steuerbares Lichtschwächungselement angeordnet.

In der DE 101 62 180 A1 ist eine interferometrische Messvorrichtung gezeigt, bei der in einem Objektlichtweg und/oder Referenzlichtweg ein elektrisch steuerbares Filter zum Variieren der Intensität des durchgeführten Lichts eingebracht ist. Damit können die Intensitäten des reflektierten Referenzstrahls und des reflektierten Messstrahls aufeinander abgestimmt werden.

Derartige interferometrische Messvorrichtungen zur dreidimensionalen Formvermessung an Messobjekten sind in verschiedenen Ausführungsformen bekannt, beispielsweise solche der klassischen Interferometrie (siehe z. B. A. Donges, R. Noll in "Lasermesstechnik", Hüthig Verlag 1993), der Weisslichtinterferometrie, bei denen Lichtquellen kurzer Kohärenzlänge (z.B. Leuchtdiode, Supelumineszenzdiode) verwendet werden (vgl. P. de Groot, L. Deck, "Surface profiling by analysis of whitelight interferograms in the spatial frequency domain" J. Mod. Opt., Vol. 42, No. 2, 389-401, 1995; Th. Dresel, G. Häusler, H. Venzke, "Threedimensional sensing of tough surfaces by coherence radar", Appl. Opt., Vol. 31, No 7, 919-925, 1992; DE 199 48 813.4 und DE 100 15 878.1), und der Heterodyninterferometrie (s. z. B. DE 197 21 842 C2; H. J. Tiziani, "Optical methods for precision measurements", Optical and Quantum Electronics, Vol. 21, 253-282, 1989; K. Creath, "Temporal phase measurement method" in d. W. Robinson, T. G. Reid: Interferogram Analysis IOP Publishing Bristol 1993; R. Onodera, Y. Ishii, "Two-wavelength interferometry that uses a Fourietransform method", Appl. Opt. Vol. 37, No. 34, 7988-7994, 1998).

Insbesondere hat sich zur dreidimensionalen Formvermessung die Weißlichtinterferometrie als Messverfahren etabliert. Der Aufbau ist typischerweise mit einem Michelson Interferometer realisiert. Das Objekt wird über ein in einem Objektlichtweg befindliches Objektiv auf einen Bildaufnehmer beispielsweise einer CCD-Kamera abgebildet und von einer ebenen Referenzwelle überlagert. Die Tiefenabtastung (in z-Richtung, Tiefenscan) kann als Scan eines im Referenzlichtweg befindlichen Referenzspiegels oder des Objekts durchgeführt werden. Beim Scan des Objekts sind Bildebene des Objektivs und Referenzebene in derselben Ebene. Das Objekt wird nur in der Tiefenachse relativ zur Referenzebene bewegt. Beim Scan des Referenzspiegels wird nur der Referenzspiegel bewegt.

Das Objekt bleibt unbewegt zum Objektiv. Der Tiefenmessbereich ist dabei durch die Schärfentiefe des Objektivs eingeschränkt. Mit diesem Messverfahren können vorteilhaft technische Oberflächen mit einer Tiefenauflösung von wenigen nm (1-10 nm) vermessen werden.

Eine vorteilhafte Weiterbildung eines Weißlichtinterferometers ist in der DE 101 15 524 A1 angegeben, wobei im Messlichtweg eine optische Anordnung zum Erzeugen eines ebenen Zwischenbilds angeordnet ist, beispielsweise eine Endoskopoptik. Der Tiefenscan kann als Scan der Referenz oder als Zwischenbildscan realisiert sein. Ein Weißlichtinterferometer mit Zwischenabbildung des Objekts bzw. mit Endoskop ist auch in der DE 100 47 495 A1 dargestellt. Mit diesen Weißlichtinterferometern wird ebenfalls eine Tiefenauflösung technischer Oberflächen von wenigen nm erreicht und darüber hinaus werden auch Messungen in engen und tiefen Bohrungen möglich.

Bei einer in der DE 101 31 778 A1 gezeigten optischen Drei-D-Messvorrichtung, beispielsweise ebenfalls einem Weißlichtinterferometer, ist in weiterer Ausgestaltung an dem Objektlichtweg eine Objektivoptik angeordnet, mit der auch gekrümmte Oberflächenbereiche oder umlaufende radialsymmetrische Oberflächenbereiche, beispielsweise Ventilsitze vermessen werden können, wobei ebenfalls eine Tiefenauflösung von wenigen nm erreicht wird und eine Messung auch in engen und tiefen Bohrungen möglich ist.

In der DE 101 62 180 A1 ist ausgeführt, bei einer interferometrischen Messvorrichtung in dem Messarm und/oder dem Referenzarm ein elektrisch steuerbares Filter anzuordnen, um die Intensitäten des Referenzstrahls und des Messstrahls aufeinander abzustimmen.

Bei der Vermessung realer technischer Oberflächen mit interferometrischen Messvorrichtungen der genannten Art werden exakte, zuverlässige Messungen allerdings häufig durch die gegebenen Oberflächeneigenschaften erschwert, insbesondere wenn besondere Optiken verwendet werden, um Messungen bei speziellen Oberflächengestaltungen vorzunehmen.

Der Erfindung liegt die Aufgabe zugrunde, eine interferometrische Messvorrichtung der eingangs genannten Art bereitzustellen, mit der eine genauere Auswertung der Interferenzmuster des Lichts auch bei optisch ungünstigen Oberflächen ermöglicht wird.

Diese Aufgabe wird mit den Merkmalen des Anspruchs 1 gelöst. Hierbei ist vorgesehen, dass die Messvorrichtung zum Vermessen flächiger Bereiche der Oberfläche ausgebildet ist, die sich über mindestens die laterale Auflösung der Mess-vorrichtung (vorzugsweise Vielfache davon) erstrecken, und dass die Adaptions-vorrichtung zur Intensitätsanpassung des Lichts und/oder der aus dem Licht erhaltenen Signale in Abhängigkeit von örtlich unterschiedlichen Reflexionseigenschaften der Oberfläche bezüglich der Messoptik ausgebildet ist, wobei durch die Ausbildung, dass die Adaptionsvorrichtung mindestens ein im Eingangslichtweg, im Messlichtweg, im Referenzlichtweg und/oder im Ausgangslichtweg angeordnetes statisches Filter aufweist, das in seinem örtlichen Lichtdurchlässigkeitsverlauf an den örtlichen Intensitätsverlauf der Einstrahlung von der Oberfläche in die Apertur der Messoptik angepasst ist, zeitlich parallel eine Anpassung an unterschiedliche Reflektivitäten der Oberfläche bezüglich der Apertur vorgenommen werden kann, so dass optimale Interferenzkontraste erhalten werden. Die Anpassung des oder der Filter erfolgt dabei z.B. anhand eines Bezugsmusters der Objektoberfläche und/oder der Eigenschaften der Messoptik wie z.B. Rundsichtoptik.

Mit diesen Maßnahmen wird erreicht, dass während des Tiefenscans die Lichtverhältnisse im Interferometer und/oder im Objektarm und Referenzarm relativ nach den von verschiedenen Bereichen bzw. Zonen der Oberfläche effektiv in die Apertur zurückreflektierten Lichtintensitäten angepasst werden, so dass in Abhängigkeit von dem jeweils betrachteten Messort die durch die Interferenz zwischen dem Objektlicht und dem Referenzlicht erhaltenen Informationen optimal erfasst und ausgewertet werden können. Dadurch werden genaue Messungen auch an Objektoberflächen erhalten, die über ihre Fläche unterschiedliche Reflektivität besitzen oder deren unterschiedliche Zonen aufgrund der Beleuchtungsverhältnisse über den Tiefenscan unterschiedliche Lichtintensitäten in die Apertur zurückreflektieren. Dadurch wird eine vollständige Vermessung von Objektoberflächen ermöglicht, welche nach herkömmlicher Technik nur ungenau oder nur zu einem Teil hätten gemessen werden können, da einzelne Zonen zu dunkel oder überbelichtet wären. Beispielsweise kann bei einer Rundsichtoptik, über die z.B. ein konischer Ventilsitz beleuchtet wird, durch die dabei auftretende gewölbte bzw. kugelabschnittförmige Wellenfront in außermittigen Beleuchtungsabschnitten die Hauptreflexionsrichtung des mehr oder weniger gebündelt reflektierten Lichts in Bereiche außerhalb der Apertur der Messoptik gerichtet sein, so dass von diesem Bereich bzw. dieser Zone der Objektoberfläche relativ wenig Licht in die Apertur zurückreflektiert wird und daher das Licht dieses Bereiches von zurückreflektiertem Licht entsprechender Bereiche der Referenzebene ohne die erfindungsgemäßen Maßnahmen stark überstrahlt würde und entsprechend schwache Interferenzkontraste entstehen würden, die schwer auswertbar wären. Mit den erfindungsgemäßen Maßnahmen hingegen wird die Messgenauigkeit auch in solchen dunkel erscheinenden Zonen wesentlich erhöht. Umgekehrt wird auch vermieden, dass die Messgenauigkeit durch zu helle Zonen der Objektoberfläche verringert wird. Entsprechende Auswirkungen der Reflektivität der Objektoberfläche bezüglich der Apertur lassen sich mit den erfindungsgemäßen Maßnahmen auch bei gekrümmten oder unterschiedlich stark in gleicher Richtung reflektierenden Oberflächenzonen weitgehend kompensieren.

Eine vorteilhafte Weiterbildung der Messvorrichtung besteht darin, dass die Adaptionsvorrichtung zum zeitlich variablen Ansteuern der Lichtquelle ausgebildet ist und dazu eine Steuerungs- oder Regelungseinheit aufweist, die derart aufgebaut ist, dass die von der Lichtquelle abgegebene Lichtmenge bei Betrachtung von Messorten geringer Einstrahlung reflektierten Lichts von der Oberfläche in die Apertur der Messoptik erhöht und/oder bei Betrachtung von Messorten höherer Einstrahlung reflektierten Lichts verringert wird. Hierdurch wird das Beleuchtungslicht der Objektoberfläche durch Steuerung bzw. Regelung der Lichtquelle auf den gerade betrachteten Messort optimal abgestimmt.

Weitere vorteilhafte Ausgestaltungen bestehen darin, dass die Adaptionsvorrichtung mindestens ein elektrisch zeitlich variabel steuerbares Filter aufweist, wozu eine ggf. zusätzliche Steuerungs- oder Regelungseinheit vorhanden ist, die derart aufgebaut ist, dass bei Anordnung mindestens eines Filters im Eingangslichtweg, im Messlichtweg und/oder im Ausgangslichtweg die Lichtdurchlässigkeit des oder der Filter bei Betrachtung von Messorten geringer Einstrahlung reflektierten Lichts von der Oberfläche in die Apertur der Messoptik erhöht und/oder bei Betrachtung von Messorten höherer Einstrahlung in die Apertur verringert wird und dass bei - gegebenenfalls zusätzlich - im Referenzlichtweg angeordnetem(n) steuerbaren Filter(n) dessen (deren) Lichtdurchlässigkeit bei Betrachtung von Messorten geringerer Einstrahlung in die Apertur verringert und/oder bei Betrachtung von Messorten höherer Einstrahlung in die Apertur erhöht wird. Auch mit diesen Maßnahmen wird durch die zeitlich abgestimmte Steuerung der Lichtintensität in Abstimmung auf den betrachteten Messort der Objektoberfläche ein möglichst hoher, gut auswertbarer Interferenzkontrast erhalten.

Eine weitere oder zusätzliche Möglichkeit, genaue Messergebnisse bei Oberflächen mit Zonen unterschiedlicher Reflektivität bezüglich der Apertur zu erhalten, besteht darin, dass eine dem Bildaufnehmer zugeordnete Steuerungs- oder Regelungseinheit in der Weise ausgebildet ist, dass bei Betrachtung von Messorten geringerer Einstrahlung reflektierten Lichts von der Oberfläche in die Apertur der Messoptik die Empfindlichkeit des Bildaufnehmers erhöht und bei Betrachtung von Messorten höherer Einstrahlung in die Apertur die Empfindlichkeit des Bildaufnehmers verringert wird. Dadurch können z.B. Überbelichtungen oder Unterbelichtungen durch Wahl optimaler Arbeitsbereiche des Bildaufnehmers in Verbindung mit der nachgeschalteten Elektronik vermieden werden.

Dabei besteht eine vorteilhafte Ausgestaltung darin, dass der örtliche Verlauf der Lichtintensität des von der Oberfläche reflektierten Lichts im Messlichtweg und im Referenzlichtweg im Wesentlichen aneinander angepasst sind, wodurch ein möglichst guter Interferenzkontrast an allen gleichzeitig erfassten Messstellen erhalten wird.

Ein vorteilhafter Aufbau der Messvorrichtung besteht darin, dass die Lichtquelle zur Abgabe kurzkohärenten Lichts ausgebildet ist und dass eine Messeinrichtung vorhanden ist, die zur Durchführung einer Tiefenabtastung und zur Auswertung mittels Weißlichtinterferometrie ausgebildet ist. Für eine Messung in engen Hohlräumen bei einfacher Handhabung ist dabei die Maßnahme vorteilhaft, dass die Messeinrichtung im Messlichtweg eine Endoskopoptik aufweist.

Die Messung an schwer zugänglichen Stellen wird weiterhin dadurch begünstigt, dass die Messeinrichtung im Messlichtweg eine ein ebenes Zwischenbild erzeugende optische Anordnung aufweist.

Eine weitere vorteilhafte Ausgestaltung zur Erfassung relativ großer und speziell geformter Bereiche bzw. Zonen der Oberfläche und genauen Vermessung besteht darin, dass im Messlichtweg objektseitig eine Rundsichtoptik angeordnet ist.

### Zeichnungen

Die Erfindung wird nachfolgend anhand von Ausführungsbeispielen unter Bezugnahme auf die Zeichnungen näher erläutert. Es zeigen:
Fig. 1 ein erstes Ausfühmngsbeispiel einer interferometrischen Messvorrichtung zur dreidimensionalen Formvermessung von Messobjekten mit einer Adaptionsvorrichtung in schematischer Darstellung und
Fig. 2 ein weiteres Ausführungsbeispiel für eine interferometrische Mess-vorrichtung zur dreidimensionalen Formvermessung an Messobjekten mit einer Adpationsvorrichtung in schematischer Darstellung.

### Ausführungsbeispiel

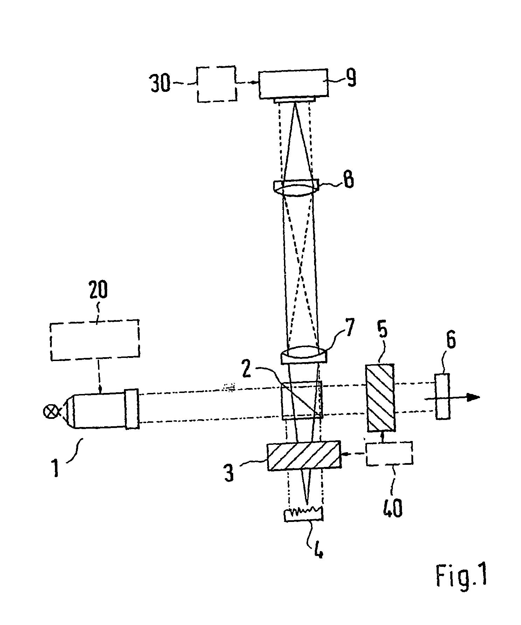

Eine in Fig. 1 gezeigte interferometrische Messvorrichtung zur dreidimensionalen Formvermessung der Oberfläche eines Objekts 4 unter Tiefenabtastung (in z-Richtung, Tiefenscan) weist eine Lichtquelle 1 auf, von der aus Licht über einen Eingangslichtweg einem Strahlteiler 2 zugeführt wird, der das Licht aufteilt und über einen Messlichtweg der Objektoberfläche und einen Referenzlichtweg einer Referenz 6 mit einer reflektierenden Ebene, insbesondere einem Spiegel zuführt. In dem Messlichtweg und dem Referenzlichtweg sind ein objektseitiges Filter 3 bzw. ein referenzseitiges Filter 5 angeordnet. Von dem Objekt 4 und der Referenz 6 reflektiertes Licht überlagert sich und wird von dem Strahlteiles 2 aus über einen Ausgangslichtweg mit einem Objektiv 7 und einem Okular 8 einem Bildaufnehmer 9 zugeführt, in dem die Lichtsignale mit den darin enthaltenen Interferenzen in elektrische Signale umgewandelt und anschließend in einer Auswerteeinrichtung verarbeitet werden, um die Oberflächenform zu erkennen. Der Lichtquelle 1, dem objektseitigen Filter 3, dem referenzseitigen Filter 5 und/oder dem Bildaufnehmer 9 können jeweilige Steuerungs- oder Regelungseinheiten 20,40 bzw. 30 zugeordnet sein, die in einer gemeinsamen Steuereinrichtung mit einem Mikrocontroller verwirklicht sein können.

Wie in Fig. 1 angedeutet, besitzt die Oberfläche des Objekts 4 Zonen unter-schiedlicher Reflektivtät bezüglich der Messoptik bzw. deren Apertur. Wird beispielsweise ein Messort in einem relativ dunklen Bereich bzw. einer dunklen Zone der Objektoberfläche beim Messvorgang betrachtet, wird sich diesem bei gleichmäßig reflektierender Referenzebene, insbesondere einem Referenzspiegel, Referenzlicht relativ hoher Intensität überlagern, so dass der Interferenzkontrast am Bildaufnehmer 9 relativ gering und mittels der Auswerteeinrichtung schwer auswertbar ist. Deshalb ist die interferometrische Messvorrichtung mit einer Adaptionsvorrichtung versehen, mit der die unterschiedliche Reflektivität der Oberflächenzonen des Objekts 4 ausgeglichen wird. Die Adaptionsvorächtung umfasst das objektseitige Filter 3 und/oder das referenzseitige Filter 5 und kann weiterhin noch die Steuerungs- oder Regelungseinheit der Lichtquelle 20 und/oder die Steuerungs- oder Regelungseinheit 30 des Bildaufnehmers 9 bzw. deren Ansteuerungsvorrichtung aufweisen. Ferner können das objektseitige Filter 3 und/oder das referenzseitige Filter 5 in ihrer Lichtdurchlässigkeit elektrisch steuerbar ausgebildet sein, wozu dann auch eine Steuerungs- oder Regelungseinheit für das oder die Filter 3, 5 vorgesehen ist.

Wird bei der Messung z.B. eine Zone der Objektoberfläche mit geringerer Reflektivität bezüglich der Apertur der Messoptik betrachtet, kann mit der Steuerungs- oder Regelungseinheit 20 der Lichtquelle 1 diese zur Abgabe einer höheren Lichtmenge angesteuert werden. Dadurch wird die für die Auswertung zur Verfügung stehende Lichtmenge insgesamt erhöht, so dass die Auswertung verbessert werden kann. Allerdings wird dabei auch eine Erhöhung des von der Referenz 6 reflektierten Lichts bewirkt, so dass der Anteil des Referenzlichts in dem überlagerten Objekt- und Referenzlicht überwiegt und der Interferenzkontrast relativ gering ist. Aus diesem Grund kann zur weiteren Verbessenmg entweder die Referenz 6 selbst entsprechend der Oberfläche des Objekts 4 örtlich in der Reflektivität unterschiedliche Zonen aufweisen oder eine Angleichung des Referenzlichts an das Objektlicht mittels des referenzseitigen Filters 5 vorgenommen werden, so dass beide Lichtanteile möglichst gut aneinander angeglichen sind und ein möglichst hoher Interferenzkontrast an jedem betrachteten Messort erhalten wird.

Alternativ kann z.B. eine feste Lichtmenge der Lichtquelle 1 vorgegeben sein und eine gegenseitige Abstimmung der Filter 3 und 5 in dem Messlichtweg bzw. Referenzlichtweg hinsichtlich eines möglichst hohen Interferenzkontrasts vorgenommen sein. Auch ist es möglich, das objektseitige Filter 3 wegzulassen und eine Abstimmung auf die Zonen unterschiedlicher Reflektivität der Objektoberfläche nur mittels des referenzseitigen Filters 5 vorzunehmen. Dabei kann die Abstimmung auf den jeweils betrachteten Messort des Objekts 4 zeitlich aufeinanderfolgend unter Steuerung des objektseitigen Filters 3 und/oder des referenzseitigen Filters 5 erfolgen. Wird dabei eine Zone der Objektoberfläche betrachtet, die eine relativ geringe Reflektvität bezüglich der Apertur aufweist bzw. relativ dunkel ist, kann die Auswertung der auftretenden Interferenzen dadurch verbessert werden, dass in. Abhängigkeit von dem betrachteten Messort die Empfindlichkeit des Bildaufnehmers 9 optimal eingestellt wird. Die Synchronisation zwischen gegebenenfalls vorgesehener Ansteuerung der Filter 3 und/oder 5 bzw. eingestellter Empfindlichkeit und betrachtetem Messort kann vorteilhaft in der übergeordneten Steuereinrichtung vorgenommen werden.

Die Erfindung besteht darin, dass das objektseitige Filter 3 und/oder das referenzseitige Filter 5, von denen auch eines fehlen kann, von vornherein in seiner Lichtdurchlässigkeit statisch an die Reflektivität der Objektoberfläche bezüglich sämtlicher Messorte angepasst ist, falls die zu vermessende Oberfläche im Wesentlichen bekannt ist Auch hierdurch werden die Lichtanteile des Referenzlichts und des Objektlichts in ihrer Intensität einander angepasst, so dass ein unter den gegebenen Messbedingungen optimaler Interferenzkontrast erhalten wird. Ähnlich ist denkbar, die Reflektivität der Referenz 6 selbst an die Reflektivität der Objektoberfläche bezüglich der Apertur der Messoptik anzupassen, um die Anteile des Referenzlichts und des Messlichts einander anzugleichen, wobei auch diese Maßnahme mit den genannten anderen Maßnahmen zum Teil oder vollständig kombinierbar ist.

Um unterschiedliche Reflektivitäten der Objektoberfläche bezüglich der Apertur bzw. unterschiedlich helle Zonen der Objektoberfläche auszugleichen, wird bei Einsatz des objektseitigen Filters 3 dieses bezüglich dunklerer Oberflächenbereiche eine höhere Lichtdurchlässigkeit aufweisen als bezüglich hellerer Oberflächenbereiche. Umgekehrt ist bei Einsatz des referenzseitigen Filtes 5 dessen Lichtdurchlässigkeit bezüglich dunklerer Zonen der Objektoberfläche geringer und bezüglich hellerer Zonen der Objektoberfläche höher, so dass die gewünschte Anpassung der Anteile des Referenzlichts und des Objektlichts erzielt wird.

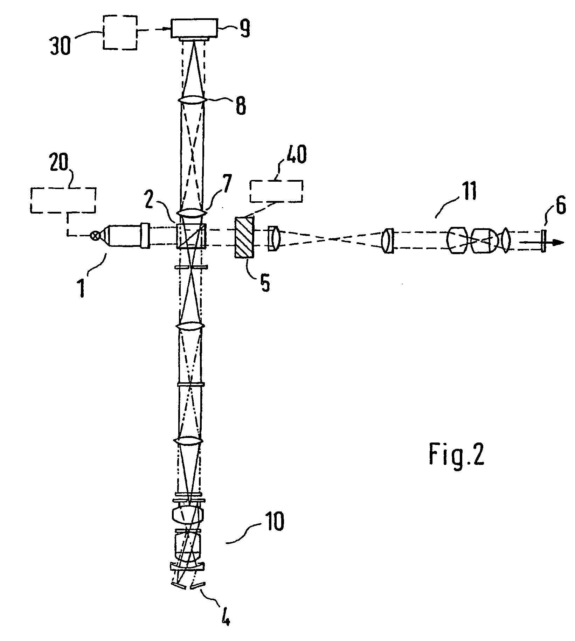

Bei dem in Fig. 2 dargestellten Ausführungsbeispiel ist der Objektlichtweg mit weiteren optischen Elementen versehen, mit denen ein geebnetes Zwischenbild z.B. einer konisch geformten Objektoberfläche erhalten wird. Dabei kann das Zwischenbild selbst abgetastet werden, wie beispielsweise in der eingangs erwähnten DE 101 15 524 A1 im Einzelnen erläutert. Ferner ist in dem Objektlichtweg zum Erfassen eines umlaufenden Oberflächenbereichs für eine einfache Vermessung des Ventilsitzes eine Rundsichtoptik angeordnet, wie sie in der DE 10131 778 A1 näher erläutert ist. Bei einer derartigen Rundsichtoptik ergibt sich im Bereich der die Objektoberfläche beleuchtenden Wellenfront z.B. eine kugelabschnittförmige Wölbung, wodurch das reflektierte Licht in einem Randbereich der Beleuchtung teilweise in eine Richtung reflektiert wird, die außerhalb der Apertur der Messoptik liegt, so dass diese Zonen durch die Messoptik dunkler erscheinen. Auch zum Ausgleich solcher, ebenfalls durch die Reflektivität der Messoberfläche bezüglich der Apertur der Messoptik dunkleren Zonen ist die in Verbindung mit Fig. 1 vorstehend beschriebene Adaptionsvorrichtung vorteilhaft. Beispielsweise kann dabei günstig das referenzseitige Filter 5 statisch ausgelegt und unter Berücksichtigung der obigen Ausführungen an die Eigenschaften der Rundsichtoptik 10 angepasst sein. Auch eine Referenzarmoptik 11 ist dabei vorteilhaft an die Rundsichtoptik 10 angepasst, um weitere Kompensationen der Einflüsse auf das Licht durch die in dem Objektlichtweg angeordneten optischen Elemente zu erreichen.

Bei dem beschriebenen Aufbau der interferometrischen Messvorrichtung ist des Weiteren vorgesehen, dass während des Tiefenscans das Objekt unbewegt zum Objekt bleibt. Der Tiefenscan erfolgt z.B. durch einen Scan des Referenzspiegels 6, Scan des Interferometers, durch (nicht gezeigte) aktive optische Modulatoren oder in einem separaten Modulationsinterferometer, wie ebenfalls an sich bekannt. Der Tiefenscan an sich wird nach dem Stand der Technik durchgeführt.

Bei der vorstehend erläuterten Anpassung der von der Lichtquelle 1 abgegebenen Lichtmenge wird während des Scanvorgangs die Lichtintensität so reguliert, dass der relevante Messbereich, d.h. der Bereich, an dem Interferenzerscheinungen entstehen (der praktisch dem Fokusbereich entspricht), so ausgeleuchtet ist, dass die Interferenzerscheinungen starken Kontrast zeigen, also große Hell-Dunkel-Intensitätsschwankungen auf dem Bildaufnehmer 9 bzw. in der Kamera während des Scans aufweisen. Diese Lichtregulierung kann während des Scans dynamisch erfolgen durch eine geeignete Regelung (Kontrastoptimierung) oder erfindungsgemäß statisch, in dem ein Referenzobjekt im Vorfeld gescannt wird und der ideale Intensitätsverlauf mit der Zeit aufgezeichnet wird. Dies kann z.B. anhand einer Kugel erläutert werden: Liegt der Fokusbereich des Interferometers am oberen Rand der Kugel, so werden hier deutliche Interferenzerscheinungen und eine gute Rückreflexion des auftretenden Lichtes erwartet. Deshalb kann hier die Lichtintensität der Lichtquelle 1 relativ niedrig eingestellt werden. Der Scan wird weiter seitlich der Kugel nach unten durchgeführt, wo die Flanken der Kugel steiler werden. Dadurch wird weniger Licht in die Apertur zurückreflektiert und eine Erhöhung der Lichtquellenintensität ist erforderlich.

Bei einem zeitlich modulierbaren objektseitigen und/oder referenzseitigen Filter 3,5 handelt es sich um ein Filter, das mit einer die Oberflächenabtastung durchführenden Scaneinheit gekoppelt ist und während des Scans die Transmission anpasst. Dies kann dynamisch erfolgen, indem über die Steuereinrichtung der Kamera des Interferometers die Lichtintensität aufgezeichnet und über eine geeignete Steuerung ausgewertet und reguliert wird. Für die Steuerung relevante Merkmale sind z.B. Intensitätsschwankungen in einem Bildelement (Pixel), die möglichst groß sein sollten, d. h. maximalen Kontrast der Interferenzerscheinungen ergeben sollten. Ähnlich sind statische Regulierungsmethoden möglich, die z.B. durch ein Referenzobjekt ermittelt werden. Hierzu wird im Vorfeld ein Referenzobjekt gescannt und die Transmission des betreffenden Filters entsprechend angepasst, so dass ein möglichst guter Kontrast der Interferenzstreifen gewährleistet ist. Wie bereits erwähnt, betrifft diese Optimierung der Transmission die Bereiche auf dem Objekt 4, die im Fokusbereich (bzw. in der Nähe des Fokusbereichs) der interferometrischen Messvorrichtung liegen.

Bei erfindungsgemäßen Einsatz eines statischen Filters mit räumlich inhomogener Transmission ist berücksichtigt, dass das Objekt durch verschiedene Topografien und/oder Oberflächenbeschaffenheiten das Licht unterschiedlich stark reflektieren kann. Der oder die vorliegend verwendeten Filter 3, 5 sind dem Objekt 4 oder einem Referenzobjekt angepasst, so dass im Idealfall jeder Objektpunkt einen optimalen Kontrast der Interferenzerscheinung aufweist. Die ideale Transmissionsverteilung des Filters 3, 5 kann z.B. im Vorfeld durch ein geometrisches Modell des Objekts 4 berechnet werden oder experimentell durch Vermessen eines Referenzobjekts bestimmt werden.

## Patentansprüche

1. Interferometrische Messvorrichtung zur dreidimensionalen Formvermessung an Messobjekten (4) mit einem Licht von einer Lichtquelle (1) über einen Eingangslichtweg aufnehmenden und in einen Messlichtweg und einen Referenzlichtweg aufteilenden Strahlteiler (2), mit einem Bildaufnehmer (9), dem von dem Messobjekt (4) und einer Referenz (6) zurückgeworfenes und zur Interferenz gebrachtes Licht über einen Ausgangslichtweg zur Umwandlung in elektrische Signale zuführbar ist, mit einer Auswerteeinrichtung zum Bestimmen der Oberflächenform aus den Signalen und mit einer Adaptionsvorrichtung (3, 5) zur Anpassung der Lichtintensität oder der aus dem interferierenden Licht erhaltenen Signale, wobei die Adaptionsvorrichtung (3, 5) zur Intensitätsanpassung des Lichts und/oder der aus dem Licht erhaltenen Signale in Abhängigkeit von örtlich unterschiedlichen Reflexionseigenschaften der Oberfläche bezüglich der Messoptik **dadurch** ausgebildet ist, dass sie mindestens ein im Eingangslichtweg, im Messlichtweg, im Referenzlichtweg und/oder im Ausgangslichtweg angeordnetes statisches Filter aufweist, das von vornherein in seinem örtlichen Lichtdurchlässigkeitsverlauf an den örtlichen Intensitätsverlauf der Einstrahlung von der Oberfläche in die Apertur der Messoptik angepasst ist.

2. Messvorrichtung nach Anspruch 1,
**dadurch gekennzeichnet,**
**dass** die Adaptionsvorrichtung (3, 5) zum zeitlich variablen Ansteuern der Lichtquelle (1) ausgebildet ist und dazu eine Steuerungs- oder Regelungseinheit (20) aufweist, die derart aufgebaut ist, dass die von der Lichtquelle (1) abgegebene Lichtmenge bei Betrachtung von Messorten geringer Einstrahlung reflektierten Lichts von der Oberfläche in die Apertur der Messoptik erhöht und/oder bei Betrachtung von Messorten höherer Einstrahlung reflektiertem Licht verringert wird.

3. Messvorrichtung nach Anspruch 1 oder 2,
**dadurch gekennzeichnet,**
**dass** die Adaptionsvorrichtung (3, 5) mindestens ein elektrisch zeitlich variabel steuerbares Filter aufweist, wozu eine ggf. zusätzliche Steuerungs- oder Regelungseinheit (40) vorhanden ist, die derart aufgebaut ist, dass bei Anordnung mindestens eines Filters im Eingangslichtweg, im Messlichtweg und/oder im Ausgangslichtweg die Lichtdurchlässigkeit des oder der Filter bei Betrachtung von Messorten geringer Einstrahlung reflektierten Lichts von der Oberfläche in die Apertur der Messoptik erhöht und/oder bei Betrachtung von Messorten höherer Einstrahlung in die Apertur verringert wird und
**dass** bei - gegebenenfalls zusätzlich - im Referenzlichtweg angeordnetem(n) steuerbaren Filter(n) dessen (deren) Lichtdurchlässigkeit bei Betrachtung von Messsorten geringerer Einstrahlung in die Apertur verringert und/oder bei Betrachtung von Messorten höherer Einstrahlung in die Apertur erhöht wird.

4. Messvorrichtung nach einem der vorhergehenden Ansprüche,
**dadurch gekennzeichnet,**
**dass** eine dem Bildaufnehmer (9) zugeordnete Steuerungs- oder Regelungseinheit (30) in der Weise ausgebildet ist, dass bei Betrachtung von Messorten geringerer Einstrahlung reflektierten Lichts von der Oberfläche in die Apertur der Messoptik die Empfindlichkeit des Bildaufnehmers (9) erhöht und bei Betrachtung von Messorten höherer Einstrahlung in die Apertur die Empfindlichkeit des Bildaufnehmers (9) verringert wird.

5. Messvorrichtung nach einem der vorhergehenden Ansprüche,
**dadurch gekennzeichnet,**
**dass** der örtliche Verlauf der Lichtintensität des von der Oberfläche reflektierten Lichts im Messlichtweg und im Referenzlichtweg im Wesentlichen aneinander angepasst sind.

6. Messvorrichtung nach einem der vorhergehenden Ansprüche,
**dadurch gekennzeichnet,**
**dass** die Lichtquelle (1) zur Abgabe kurzkohärenten Lichts ausgebildet ist und
**dass** eine Messeinrichtung vorhanden ist, die zur Durchführung einer Tiefenabtastung und zur Auswertung mittels Weißlichtinterferometrie ausgebildet ist.

7. Messvorrichtung nach Anspruch 6,
**dadurch gekennzeichnet,**
**dass** die Messeinrichtung im Messlichtweg eine Endoskopoptik aufweist.

8. Messvorrichtung nach Anspruch 6 oder 7,
**dadurch gekennzeichnet,**
**dass** die Messeinrichtung im Messlichtweg eine ein ebenes Zwischenbild erzeugende optische Anordnung aufweist.

9. Messvorrichtung nach einem der vorhergehenden Ansprüche,
**dadurch gekennzeichnet,**
**dass** im Messlichtweg objektseitig eine Rundsichtoptik angeordnet ist.

## Claims

1. Interferometric measurement apparatus for three-dimensional shape measurement on measurement objects (4), having a beam splitter (2) which receives light from a light source (1) via an input light path and splits it into a measurement light path and a reference light path, having an image sensor (9) to which light that is thrown back from the measurement object (4) and a reference (6) and is caused to interfere can be fed via an output light path for conversion into electrical signals, having an evaluation device for determining the surface shape from the signals, and having an adaptation apparatus (3, 5) for adapting the light intensity or the signals which are obtained from the interfering light, in which the adaptation apparatus (3, 5) is designed for adapting the intensity of the light and/or of the signals obtained from the light as a function of spatially different reflection properties of the surface with reference to the measurement optics by virtue of the fact that it has at least one static filter which is arranged in the input light path, in the measurement light path, in the reference light path and/or in the output light path, and the spatial optical transparency profile of which is adapted from the start to the spatial intensity profile of the irradiation from the surface into the aperture of the measurement optics.

2. Measurement apparatus according to Claim 1, **characterized**
**in that** the adaptation apparatus (3, 5) is designed for driving the light source (1) in a temporally variable fashion, and for this purpose has a control or regulation unit (20) which is designed in such a way that the light quantity emitted by the light source (1) is increased during viewing of measurement locations with low irradiation of reflected light from the surface into the aperture of the measurement optics, and/or is reduced during viewing of measurement locations with higher irradiation of reflected light.

3. Measurement apparatus according to Claim 1 or 2, **characterized**
**in that** the adaptation apparatus (3, 5) has at least one electrically temporally variable controllable filter, for which purpose there is present a possible additional control or regulation unit (40) which is designed in such a way that given the arrangement of at least one filter in the input light path, in the measurement light path and/or in the output light path, the optical transparency of the filter or filters is increased during viewing of measurement locations with low irradiation of reflected light from the surface into the aperture of the measurement optics, and/or is reduced during viewing of measurement locations with relatively high irradiation into the aperture, and
**in that** given - possibly additional - controllable filter(s) arranged in the reference light path, the optical transparency of said filter(s) is reduced during viewing of measurement locations with a lower irradiation into the aperture, and/or is increased during viewing of measurement locations with a higher irradiation into the aperture.

4. Measurement apparatus according to one of the preceding claims,
**characterized**
**in that** a control or regulation unit (30) assigned to the image sensor (9) is designed in such a way that the sensitivity of the image sensor (9) is increased during viewing of measurement locations with lower irradiation of reflected light from the surface into the aperture of the measurement optics, and the sensitivity of the image sensor (9) is reduced during viewing of measurement locations with a higher irradiation into the aperture.

5. Measurement apparatus according to one of the preceding claims,
**characterized**
**in that** the spatial profile of the light intensity of the light reflected by the surface in the measurement light path and in the reference light path are substantially adapted to one another.

6. Measurement apparatus according to one of the preceding claims,
**characterized**
**in that** the light source (1) is designed to emit short-coherence light, and
**in that** a measuring device is present which is designed for carrying out depth scanning and for evaluation by means of white light interferometry.

7. Measurement apparatus according to Claim 6,
**characterized**
**in that** the measuring device has an endoscope optics in the measurement light path.

8. Measurement apparatus according to Claim 6 or 7,
**characterized**
**in that** the measuring device has an optical arrangement generating a plane, intermediate image in the measurement light path.

9. Measurement apparatus according to one of the preceding claims,
**characterized**
**in that** a panoramic optics is arranged on the object side in the measurement light path.

## Revendications

1. Dispositif de mesure interférométrique en vue de la mesure tridimensionnelle de la forme d'objets (4) à mesurer à l'aide d'une lumière provenant d'une source de lumière (1) par l'intermédiaire d'un diviseur de faisceau (2) qui reprend un parcours de lumière d'entrée et le divise en un parcours de lumière de mesure et un parcours de lumière de référence, et présentant un enregistreur d'image (9) auquel la lumière réfléchie par l'objet de mesure (4) et par une référence (6) et amenée à interférer peut être transmise par un parcours de lumière de sortie pour être convertie en signaux électriques, une unité d'évaluation qui détermine la forme de la surface à partir des signaux et un dispositif d'adaptation (3, 5) qui adapte l'intensité de la lumière ou les signaux obtenus à partir de la lumière d'interférence, le dispositif d'adaptation (3, 5) étant configuré pour adapter à l'optique de mesure l'intensité de la lumière et/ou les signaux obtenus à partir de la lumière, qui varient localement en fonction des propriétés de réflexion de la surface, par le fait qu'il présente au moins un filtre statique disposé dans le parcours de lumière d'entrée, dans le parcours de lumière de mesure, dans le parcours de lumière de référence et/ou dans le parcours de lumière de sortie et dont l'évolution locale de la transparence vis-à-vis de la lumière est adaptée à l'avance à l'évolution locale d'intensité de l'irradiation de la surface dans l'ouverture de l'optique de mesure.

2. Dispositif de mesure selon la revendication 1, **caractérisé en ce que** le dispositif d'adaptation (3, 5) est configuré pour commander de manière variable dans le temps la source de lumière (1) et présente dans ce but une unité (20) de commande ou de régulation constituée de telle sorte que la quantité de lumière délivrée par la source de lumière (1) est augmentée lors de l'observation d'emplacements de mesure où la lumière réfléchie par la surface irradie faiblement l'ouverture de l'optique de mesure et/ou est diminuée lors de l'observation d'emplacements de mesure où la lumière réfléchie par la surface irradie plus fortement l'ouverture de l'optique de mesure.

3. Dispositif de mesure selon la revendication 1 ou 2, **caractérisé en ce que** le dispositif d'adaptation (3, 5) présente au moins un filtre qui peut être commandé électriquement de manière variable dans le temps, **en ce qu'**une unité supplémentaire (40) de commande ou de régulation prévue dans ce but est constituée de telle sorte que lorsqu'au moins un filtre est disposé dans le parcours de lumière d'entrée, dans le parcours de lumière de mesure et/ou dans le parcours de lumière de sortie, la transparence à la lumière du ou des filtres est augmentée lors de l'observation d'emplacements de mesure où la lumière réfléchie par la surface irradie faiblement l'ouverture de l'optique de mesure et/ou est diminuée lors de l'observation d'emplacements de mesure où la lumière réfléchie par la surface irradie plus fortement l'ouverture de l'optique de mesure et **en ce que** si un ou plusieurs filtres asservis, éventuellement supplémentaires, sont disposés dans le parcours de lumière de référence, leur transparence à la lumière est augmentée lors de l'observation d'emplacements de mesure où la lumière réfléchie par la surface irradie faiblement l'ouverture de l'optique de mesure et/ou est diminuée lors de l'observation d'emplacements de mesure où la lumière réfléchie par la surface irradie plus fortement l'ouverture de l'optique de mesure.

4. Dispositif de mesure selon l'une des revendications précédentes, **caractérisé en ce qu'**une unité (30) de commande ou de régulation associée à l'enregistreur d'image (9) est configurée de telle sorte que la sensibilité de l'enregistreur d'image (9) est augmentée lors de l'observation d'emplacements de mesure où la lumière réfléchie par la surface irradie faiblement l'ouverture de l'optique de mesure et est diminuée lors de l'observation d'emplacements de mesure où la lumière réfléchie par la surface irradie plus fortement l'ouverture de l'optique de mesure.

5. Dispositif de mesure selon l'une des revendications précédentes, **caractérisé en ce que** les évolutions locales de l'intensité de la lumière réfléchie par la surface dans le parcours de lumière de mesure et dans le parcours de lumière de référence sont essentiellement adaptées l'une à l'autre.

6. Dispositif de mesure selon l'une des revendications précédentes, **caractérisé en ce que** la source de lumière (1) est configurée pour émettre de la lumière brièvement cohérente et **en ce qu'**il présente un dispositif de mesure qui est configuré pour exécuter une évaluation de la profondeur et pour l'évaluer par interférométrie de lumière blanche.

7. Dispositif de mesure selon la revendication 6, **caractérisé en ce que** le dispositif de mesure présente une optique d'endoscope dans le parcours de lumière de mesure.

8. Dispositif de mesure selon la revendication 6 ou 7, **caractérisé en ce que** le dispositif de mesure présente dans le parcours de lumière de mesure un système optique qui forme une image intermédiaire plane.

9. Dispositif de mesure selon l'une des revendications précédentes, **caractérisé en ce qu'**une optique circulaire d'observation est disposée du côté de l'objet dans le parcours de lumière de mesure.
